**Europäisches Patentamt**

**European Patent Office**

**Office européen des brevets**

(19)

(11) **EP 1 003 232 A2**

(12) **EUROPÄISCHE PATENTANMELDUNG**

(43) Veröffentlichungstag:
**24.05.2000 Patentblatt 2000/21**

(51) Int Cl.[7]: **H01M 8/06**, B01D 53/88,
B01D 53/94, B01J 8/02,
F01N 3/28

(21) Anmeldenummer: **99121326.5**

(22) Anmeldetag: **26.10.1999**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **17.11.1998 DE 19852960**

(71) Anmelder: **DBB Fuel Cell Engines Gesellschaft
mit beschränkter Haftung
73230 Kirchheim/Teck-Nabern (DE)**

(72) Erfinder:
• **Boneberg, Stefan
72660 Beuren (DE)**

• **Fischer, Tobias
88250 Weingarten (DE)**
• **Heil, Dietmar
88477 Schwendi (DE)**
• **Schonert, Michael
70374 Stuttgart (DE)**
• **Schwab, Konrad
89077 Ulm (DE)**

(74) Vertreter: **Kocher, Klaus-Peter Dipl.-Phys et al
DaimlerChrysler AG,
Intellectual Property Management,
FTP/A-C106
70546 Stuttgart (DE)**

(54) **Abgaskatalysator zur Nachverbrennung der Anodenabgase von Brennstoffzellensystemen**

(57) Die Erfindung betrifft einen Abgaskatalysator (1) zur Nachverbrennung der Anodenabgase von Brennstoffzellensystemen mit einem im wesentlichen zylinderförmigen Gehäuse (2). Im Gehäuse sind zwei koaxial zur Gehäuselängsachse angeordnete und jeweils auf der Einlaßseite gasdicht gegen das Gehäuse abgedichtete gasdurchlässige Rohre (6,8) vorgesehen, zwischen denen eine Katalysatorschüttung (9) eingebracht ist. Weiterhin ist ein in Richtung der Gehäuselängsachse beweglicher Boden (11), der das äußere Rohr auf der Auslaßseite gegenüber dem inneren Rohr gasdicht und gegenüber dem äußeren Rohr im wesentlichen dicht abschließt, vorgesehen. Schließlich ist noch ein elastisches Element (12), welches den Boden in Richtung der Gehäuselängsachse entgegen der Strömungsrichtung des Abgases mit einer Kraft beaufschlagt, zwischen dem Gehäuseboden (2b) und dem Boden (11) angeordnet.

Printed by Jouve, 75001 PARIS (FR)

**Beschreibung**

Die Erfindung betrifft einen Abgaskatalysator zur Nachverbrennung der Anodenabgase von Brennstoffzellensystemen gemäß dem Oberbegriff des Patentanspruchs 1.

Aus der US 52 29 222 A1 ist ein Brennstoffzellensystem bekannt, bei dem das Anodenabgas der Brennstoffzelle mit Hilfe eines Abgaskatalysators vor der Abgabe an die Umgebung nachbehandelt wird.

Es ist die Aufgabe der Erfindung, einen Abgaskatalysator zur Nachverbrennung der Anodenabgase von Brennstoffzellensystemen mit geringem Druckverlust und hoher Standzeit des Katalysatormaterials zu schaffen.

Die Aufgabe wird erfindungsgemäß durch die kennzeichnenden Merkmale des Patentanspruchs 1 gelöst.

Durch die erfindungsgemäße Vorrichtung kann der Druckverlust im Abgaskatalysator verringert werden, weil das Anodenabgas die Vorrichtung von innen nach außen durchströmt und somit entlang des Reaktionsweges eine Volumenvergrößerung eintritt. Weiterhin können durch die Strömung von innen nach außen die Wärmeverluste im Abgaskatalysator minimiert werden.

Weiterhin gewährleistet die Anordnung eine gleichmäßige Beaufschlagung des vorzugsweise in Form einer Katalysatorschüttung vorgesehenen Katalysatormaterials und sichert somit eine hohe Standzeit des eingesetzten Katalysatormaterials.

Durch die Federbeaufschlagung des in Gehäuselängsrichtung beweglichen Bodens wird die Katalysatorschüttung im Bereich zwischen dem inneren und dem äußeren Rohr fixiert. Durch die Verwendung von Ringscheiben im Einlaßbereich und im Bereich des beweglichen Bodens können sogenannte Bypass-Ströme verhindert werden. Unter Bypass-Ströme versteht man Teilgasmengen, die den Abgaskatalysator entlang der die Katalysatorschüttung aufnehmenden Wandungen ohne oder mit nur geringem Kontakt zu der Katalysatorschüttung unreagiert durchströmt. Da solche Bypass-Ströme effektiv verhindert werden können im austretenden Abgas geringe Werte für Restkohlenwasserstoff realisiert werden.

Weitere Vorteile und Ausgestaltungen gehen aus den Unteransprüchen und der Beschreibung hervor. Die Erfindung ist nachstehend anhand einer Zeichnung näher beschrieben, wobei der Abgaskatalysator insgesamt mit 1 bezeichnet ist. Der Abgaskatalysator 1 weist ein zylindrisches Gehäuse 2 mit einem Gehäusedeckel 2a und einem Gehäuseboden 2b auf. Im Bereich des Gehäusedeckels 2a ist ein Einlaßstutzen 3 angeordnet. Entsprechend ist am Gehäuseboden 2b ein Auslaßstutzen 4 vorgesehen. Am Einlaßbeziehungsweise Auslaßstutzen 3, 4 ist jeweils ein Flansch 5a, 5b zum Anschluß des Abgaskatalysators 1 an die nicht weiter gezeigten Leitungen des Brennstoffzellensystems angeordnet. Gemäß Ausführungsbeispiel ist der Einlaßbeziehungsweise Auslaßstutzen 3, 4 koaxial zur Gehäuselängsachse angeordnet. Er kann jedoch auch an anderer Stelle beziehungsweise in einer anderen Richtung verlaufend vorgesehen werden.

Im Innern des Gehäuses 2 ist ein erstes, koaxial zur Gehäuselängsachse angeordnetes, gasdurchlässiges inneres Rohr 6 vorgesehen. Das innere Rohr 6, welches vorzugsweise aus einem Lochblech besteht, ist auf der Gaseinlaßseite fest mit dem Gehäusedeckel 2a verbunden. Hierzu kann das innere Rohr 6 in eine entsprechende Passung 7 im Einlaßstutzen 3 eingeschraubt oder eingesteckt und anschließend verschweißt werden. Weiterhin ist ein zweites, koaxial zur Gehäuselängsachse angeordnetes, gasdurchlässiges äußeres Rohr 8 vorgesehen. Das äußere Rohr 8 ist ebenfalls auf der Einlaßseite gasdicht mit dem Gehäusedeckel 2a verbunden. Beispielsweise wird das äußere Rohr 8 mit dem Gehäusedeckel 2a verschweißt.

Das äußere Rohr 8 weist einen Radius $r_A$ auf, der größer als der Radius $r_I$ des inneren Rohres 6 ist. Gleichzeitig ist der Radius $r_A$ des äußeren Rohres 8 aber kleiner als der Radius $r_G$ des zylindrischen Gehäuses 2:

$$r_I < r_A < r_G$$

Somit bildet sich zum einen zwischen dem inneren Rohr 6 und dem äußeren Rohr 8 ein innerer Ringraum 9 aus. Gleichzeitig bildet sich zwischen dem äußeren Rohr 8 und dem zylindrischen Gehäuse 2 ein äußerer Ringraum 10 aus. Vorzugsweise werden die Radien der Rohre 6 und 8 und des Gehäuses 2 so gewählt, daß sich nur ein schmaler äußerer Ringraum 10 bildet, während der innere Ringraum 9 den größten Teil des Volumens im Gehäuse 2 einnimmt.

Weiterhin ist ein in Richtung der Gehäuselängsachse beweglicher, kreisförmiger Boden 11 vorgesehen, der in das äußere Rohr 8 hinein ragt und dieses auf der Auslaßseite im wesentlichen dicht abschließt. Hierzu wird der Außendurchmesser des Bodens 11 im wesentlichen gleich dem Innendurchmesser des äußeren Rohres 8 gewählt. Der bewegliche Boden 11 wird mit Hilfe einer Feder 12 entgegen der Gasströmungsrichtung mit einer Kraft beaufschlagt, so daß der Boden 11 durch die Feder 12 in Richtung Gehäusedeckel 2a gedrückt wird. Die Feder 12 ist ebenfalls koaxial zur Gehäuselängsachse angeordnet und stützt sich zum einen am Gehäuseboden 2b im Bereich des Auslaßstutzens 4 ab. Zum anderen stützt sich die Feder 12 an einer Erhöhung 13 ab, die ebenfalls koaxial zur Gehäuselängsachse auf der Unterseite des Bodens 11 vorgesehen ist. Anstelle der Feder 12 können selbstverständlich auch andere elastische Elemente verwendet werden, die eine entsprechende Kraft auf den Boden 11 ausüben.

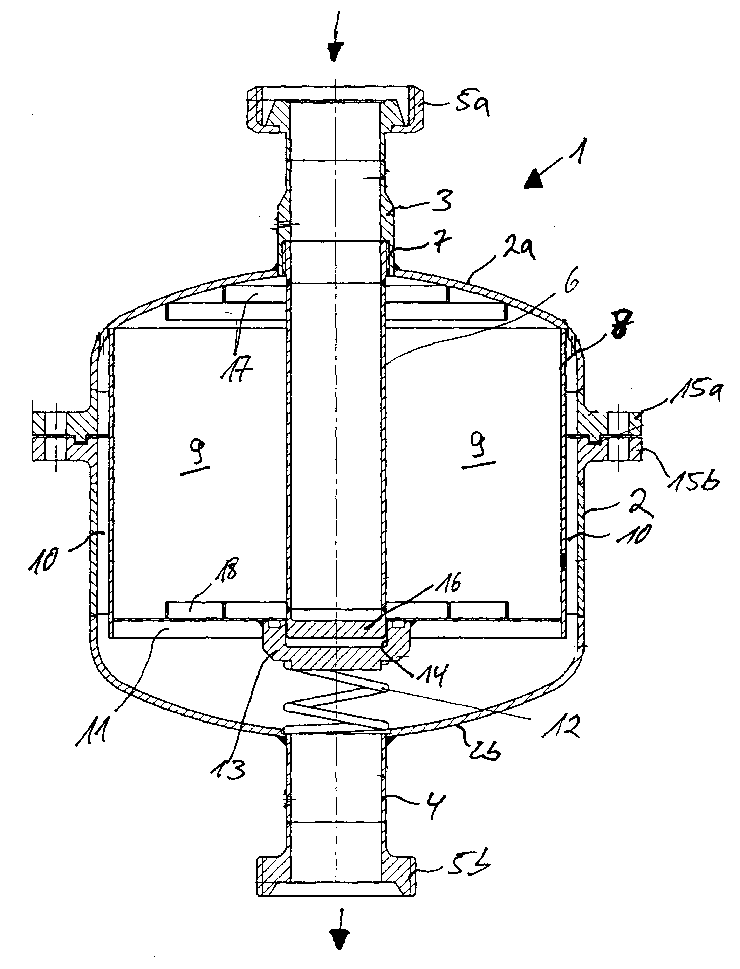

Der innere Ringraum 9, der radial durch die gasdurchlässigen Rohre 6, 8 und in Richtung der Gehäuselängsachse durch den Gehäusedeckel 2a und den Boden 11 begrenzt ist, wird mit einer nicht dargestellten Katalysatorschüttung gefüllt. Hierbei handelt es sich vorzugsweise um ein edelmetallhaltiges Material in Form von Pellets. Durch das Katalysatormaterial werden die brennbaren Bestandteile des Anodenabgases möglichst vollständig oxidiert. Die Größe der Pellets und der Durchmesser der Löcher in den vorzugsweise aus Lochblech ausgebildeten Rohren 6, 8 wird so gewählt, daß die Pellets nicht durch das Lochblech hindurch können. Gegenüber dem Gehäusedeckel 2a sind beide Rohre 6, 8 gasdicht abgeschlossen, so daß auch hier kein Katalysatormaterial aus dem inneren Ringraum 9 austreten kann. In Richtung der Gasströmung wird der innere Ringraum schließlich von dem Boden 11 begrenzt. Dieser muß zum äußeren Rohr 8 zwar nicht gasdicht abschließen, jedoch zumindest soweit, daß kein Katalysatormaterial zwischen dem äußeren Rohr 8 und dem Boden 11 hindurch treten kann. Hierzu kann beispielsweise am äußeren Umfang des Bodens 11 ein biegsames Metallgeflecht vorgesehen werden, das bei einer Bewegung des Bodens 11 an der Innenfläche des äußeren Rohres 8 entlang streift. In der Zeichnung ist das Drahtgeflecht jedoch aus Gründen der Übersichtlichkeit nicht dargestellt.

In der Erhöhung 13 ist vorzugsweise ein zylinderförmiges Sackloch 14 vorgesehen, dessen Innendurchmesser im wesentlichen gleich dem Außendurchmesser $r_I$ des inneren Rohres 6 ist. In dieses Sackloch 14 kann beim Zusammenbau des Abgaskatalysators 1 das innere Rohr 6 eingesteckt werden. Das innere Rohr 6 wird allerdings nicht am Boden 11 fixiert, sondern das innere Rohr 6 ist im Sackloch 14 entlang der Gehäuselängsachse frei beweglich. Das Sackloch 14 dient somit als Führung für den Boden 11 in Bezug zu den Rohren 6 und 8. Diese Führung ist für die Funktion des Abgaskatalysators 1 nicht zwingend, sie verhindert jedoch ein Verkanten des Bodens.

Zur Erleichterung der Herstellung ist das Gehäuse 2 im oberen Bereich geteilt. Beim Zusammenbau werden zuerst die beiden Rohre 6, 8 mit dem Gehäusedeckel 2a verschweißt. Anschließend wird der Abgaskatalysator 1 gewendet und der innere Ringraum 9 mit Katalysatormaterial gefüllt. Anschließend wird der innere Ringraum 9 durch den Boden 11 verschlossen, wobei das innere Rohr 6 in das Sackloch 14 eingeführt wird. Schließlich wird der Gehäuseboden 2b aufgesteckt und mit dem Gehäuseboden 2a verbunden. Hierzu ist vorzugsweise an den Stoßstellen der beiden Gehäuseteile 2a, 2b jeweils ein Ringbund 15a, 15b mit entsprechenden Verschraubungen vorgesehen. Beim Zusammenbau wird außerdem zwischen den Boden 11 und dem Gehäuseboden 2b die Feder 12 angeordnet. Zur Lagefixierung der Feder 12 können beispielsweise an der Erhöhung 13 und am Gehäuseboden 2b jeweils konzentrisch zur Gehäuselängsachse entsprechende Sitze vorgesehen werden. Durch die Feder 12 wird der Boden 11 nach dem Zusammenbau des Abgaskatalysators 1 in Richtung Gehäusedeckel 2a gedrückt, so daß das Katalysatormaterial im inneren Ringraum 9 zusammengedrückt und somit fixiert wird. Kommt es während des Betriebs des Abgaskatalysators 1 zu einem Volumenschwund des Katalysatormaterials, so wird der Boden 11 durch die Kraft der Feder 12 weiter in Richtung Gehäusedeckel 2a gedrückt, so daß das Katalysatormaterial weiterhin in seiner Lage fixiert bleibt.

Die Längen der beiden Rohre 6 und 8, die Tiefe des Sackloches 14, die Menge des eingefüllten Katalysatormaterials und der Federweg der Feder 12 werden so aufeinander abgestimmt, daß beim Zusammenbau der Boden 11 ausreichend weit in das äußere Rohr 8 hineinragt, so daß der innere Ringraum 9 durch den Boden 11 verschlossen wird. Weiterhin ragt in der Einbaustellung das innere Rohr 6 nicht vollständig in das Sackloch 14 hinein, sondern es verbleibt ein Spalt zwischen dem Ende des inneren Rohres 6 und dem Boden des Sackloches 14. Dieser Spalt stellt somit den maximalen Hub des Bodens 11 gegenüber dem inneren Rohr 6 dar. Er wird derart gewählt, daß der maximal zu erwartende Schwund des Katalysatormaterials ausgeglichen werden kann. Entsprechend wird auch der Federweg der Feder 12 dimensioniert.

Im folgenden wird nun die Strömungsführung und die Funktionsweise des Abgaskatalysators beschrieben. Das Anodenabgas des Brennstoffzellensystems wird zusammen mit einem Oxidationsmittel, vorzugsweise Luft, über den Einlaßstutzen 3 und das innere Rohr 6 koaxial zur Gehäuselängsachse in den Abgaskatalysator 1 geführt. Das innere Rohr 6 dient als Zuführungsleitung und ist vorzugsweise nicht mit Katalysatormaterial gefüllt. Prinzipiell ist es jedoch auch möglich, das innere Rohr 6 mit Katalysator zu befüllen. In diesem Fall müßte aber zwischen Einlaßstutzen 3 und innerem Rohr 6 ein Gitter oder Ähnliches vorgesehen werden, um das Austreten von Katalysatormaterial in Richtung Einlaßstutzen 3 zu verhindern.

Auf der dem Einlaßstutzen 3 abgewandten Ende ist das innere Rohr 6 durch einen weiteren Boden 16 verschlossen. Jedoch ist die Mantelfläche des inneren Rohres 6 gasdurchlässig, vorzugsweise in Form eines Lochbleches ausgeführt. Die Größe der Löcher wird so gewählt, daß eine ausreichende Zufuhr des Gasgemisches in den inneren Ringraum 9 gewährleistet wird, gleichzeitig jedoch ein Austreten von Katalysatorpartikeln in das innere Rohr 6 verhindert wird. Vom inneren Rohr 6 tritt nun das Gasgemisch radial in den inneren Ringraum 9 ein. Dort durchströmt das Gasgemisch den mit Katalysatormaterial gefüllten inneren Ringraum 9 weiterhin in radialer Richtung und tritt dann durch die gasdurchlässige Mantelfläche des äußeren Rohres 8 in den äußeren Ringraum 10 aus. Die Mantelfläche des äußeren Rohres 8 ist vorzugsweise ebenfalls als Lochblech ausgebildet, wobei der Durchmesser der Löcher, wie bereits weiter oben beschrieben, geeignet dimensioniert wird.

Ein Entweichen des Gasgemisches nach oben oder unten aus dem inneren Ringraum 9 ist nicht möglich. Nach oben sind beide Rohre 6, 8 mit dem Gehäusedeckel 2a gasdicht verbunden. Nach unten ist das innere Rohr 6 zwar nicht gasdicht mit dem Boden 11 verbunden. Da aber im Boden 11 lediglich ein Sackloch 14 vorgesehen ist ist ein direktes Entweichen des Gasgemisches vom inneren Rohr 6 in Richtung des Auslaßstutzens 4 nicht möglich. Allenfalls zwischen dem Boden 11 und dem äußeren Rohr 8 kann das Gasgemisch entweichen, falls wie oben beschrieben zwischen Boden 11 und äußerem Rohr 8 ein biegsames Metallgeflecht vorgesehen ist. Jedoch muß das Gasgemisch vor Erreichen des Metallgeflechtes dennoch den inneren Ringraum 9 in radialer Richtung vollständig durchströmen, so daß ein ausreichender Kontakt mit dem Katalysator und damit eine ausreichende Reaktion gewährleistet ist. Aus dem äußeren Ringraum 10 strömt schließlich das umgesetzte Gasgemisch entlang des Gehäusebodens 2b zum Auslaßstutzen 4, wo es dann den Abgaskatalysator 1 verläßt.

Zur Vermeidung von Bypass-Strömen können weiterhin noch im Bereich des Gehäusedeckels 2a und des Bodens 11 Ringscheiben 17, 18 vorgesehen werden. Dadurch wird verhindert, daß ein Teil des Gasgemisches den inneren Ringraum 6 entlang des Gehäusedeckels 2a beziehungsweise des Bodens 11 ohne ausreichenden Kontakt mit dem Katalysatormaterial durchströmt und somit die brennbaren Bestandteile im Gasgemischstrom nicht vollständig umgesetzt werden. Im Bereich des Gehäusedeckels 2a sind hierzu zwei Ringscheiben 17 vorgesehen, die über das innere Rohr 6 geschoben und jeweils an den Berührungsstellen mit dem Gehäusedeckel 2a verschweißt werden. Auf der dem inneren Ringraum 9 zugewandten Seite des Bodens 11 ist eine weitere Ringscheibe 18 vorgesehen, die ebenfalls mit dem Boden 11 verschweißt ist. Der Innendurchmesser der Ringscheibe 18ist hierbei größer als der Außendurchmesser $r_I$ des inneren Rohres 6 gewählt. Somit weisen beide Wandbereiche eine Stufung auf, so daß die Wandströmungen ausreichend verwirbelt und damit in ausreichenden Kontakt mit dem Katalysatormaterial kommen.

Durch den erfindungsgemäßen Abgaskatalysator 1 können zahlreiche Vorteile erzielt werden. Zum einen wird der innere Ringraum 9 in radialer Richtung durchströmt. Somit nimmt das Volumen in Strömungsrichtung zu und damit der Druckverlust ab. Gleichzeitig werden durch die radiale Strömung die Wärmeverluste minimiert. Weiterhin wird das Katalysatormaterial fixiert und gleichmäßig beaufschlagt, so daß eine höhere Standzeit des Abgaskatalysators 1 realisiert werden kann. Durch einen ausreichenden Umsatz im inneren Ringraum 9 und durch die Vermeidung von Bypass-Strömen können geringe Restmengen an unverbrannten Kohlenwasserstoffen gewährleistet werden. Schließlich kann der Abgaskatalysator 1 durch Variation der Länge und/oder der Radien der Rohre 6 und 8 problemlos und flexibel an den jeweiligen Leistungsbedarf angepaßt werden.

## Patentansprüche

1. Abgaskatalysator (1) zur Nachverbrennung der Anodenabgasen von Brennstoffzellensystemen mit einem im wesentlichen zylinderförmigen Gehäuse (2), mit jeweils einem auf einem Gehäusedeckel (2a) beziehungsweise einem Gehäuseboden (2b) angeordneten Einlaß- beziehungsweise Auslaßstutzen (3, 4), mit einem ersten, koaxial zur Gehäuselängsachse angeordneten, gasdurchlässigen inneren Rohr (6), welches auf der Gaseinlaßseite fest mit dem Gehäusedeckel (2a) verbunden ist, mit einem zweiten, koaxial zur Gehäuselängsachse angeordneten, gasdurchlässigen äußeren Rohr (8), welches einen Radius ($r_A$) größer als der Radius ($r_I$) des inneren Rohres (6), aber kleiner als der Radius ($r_G$) des Gehäuses (2) aufweist, und welches auf der Einlaßseite gasdicht mit dem Gehäusedeckel (2a) verbunden ist, mit einem in Richtung der Gehäuselängsachse beweglichen und in das äußere Rohr (8) ragenden Boden (11), der gegenüber dem äußeren Rohr (8) im wesentlichen dicht abschließt, mit im Bereich zwischen dem inneren und äußeren Rohr (6, 8) vorgesehenen Katalysatormaterial zur katalytischen Oxidation des Anodenabgases mit Hilfe eines Oxidationsmittels und mit einem elastischen Element (12), welches den Boden (11) in Richtung der Gehäuselängsachse entgegen der Strömungsrichtung des Abgases mit einer Kraft beaufschlagt.

2. Abgaskatalysator nach Anspruch 1,
   **dadurch gekennzeichnet,**
   daß zwischen dem Gehäuseboden (2b) und dem Boden (11) eine Feder (12) vorgesehen ist, die sich am Gehäuseboden (2b) abstützt und die den Boden (11) in Richtung der Gehäuselängsachse entgegen der Strömungsrichtung des Abgases mit einer Kraft beaufschlagt.

3. Abgaskatalysator nach Anspruch 1,
   **dadurch gekennzeichnet,**
   daß das innere und das äußere Rohr (6, 8) als Lochblech ausgeführt ist und daß das Katalysatormaterial in Form einer Katalysatorschüttung vorliegt, wobei der Durchmesser der Löcher im Lochblech kleiner als der Durchmesser der Pellets in der Katalysatorschüttung ist.

4. Abgaskatalysator nach Anspruch 1,
   **dadurch gekennzeichnet,**
   daß im Einlaßbereich zumindest eine das innere Rohr (6) umschließende Ringscheibe (17) angeordnet ist, die auf ihrer Außenseite gasdicht mit dem Gehäusedeckel (2a) verbunden ist.

**5.** Abgaskatalysator nach Anspruch 1,
**dadurch gekennzeichnet,**
daß der Boden (11) auf der der Katalysatorschüttung zugewandten Seite eine koaxial zur Gehäuselängsachse angeordnete, kreisförmige und in Richtung des Gehäusebodens erstreckende Vertiefung (14) aufweist, in der das innere Rohr (6) beweglich geführt ist.

**6.** Abgaskatalysator nach Anspruch 5,
**dadurch gekennzeichnet,**
daß auf der der Katalysatorschüttung zugewandten Seite des Bodens (11) eine das innere Rohr (6) umschließende Ringscheibe (18) angeordnet ist, die gasdicht mit dem Boden (11) verbunden ist.